# EUROPEAN PATENT APPLICATION

(11) **EP 2 295 766 A2**
(43) Date of publication of application: **16.03.2011**
(21) Application number: 10171760.1
(22) Date of filing: 03.08.2010
(51) Int. Cl.: F02C 7/18, F01D 25/12

(54) **Combined-cycle steam turbine having novel steam cooling flow configuration**

(30) Priority: 06.08.2009 US 536689
(71) Applicant: General Electric Company, Schenectady, NY 12345 (US)
(72) Inventor: Sanchez, Nestor Harnandez, Schenectady, NY 12345 (US)
(74) Representative: Gray, Thomas

(57) **Abstract**

Embodiments of the invention relate generally to turbines and, more particularly, to steam turbines, single-shaft combined-cycle turbines, and turbine systems having novel startup cooling flow configurations. In one embodiment, the invention provides a single-shaft combined-cycle turbine (3000) comprising: a gas turbine (2100); a steam turbine (2200) including: a high-pressure section (2280); an intermediate-pressure section (2240); and a low-pressure section (2210) having a plurality of stages (2212A-H); a turbine shaft (2300) disposed within and between both the gas turbine (2100) and the steam turbine (2200); a first cooling steam flow inlet (2222) adjacent a first (2212C) of the plurality of stages (2212A-H) of the low-pressure section (2210); and a second cooling steam flow inlet (2224) adjacent a second (2212H) of the plurality of stages (2212A-H) of the low-pressure section (2210).

## Description

### BACKGROUND OF THE INVENTION

Embodiments of the invention relate generally to turbines and, more particularly, to steam turbines, single-shaft combined-cycle turbines, and turbine systems having novel cooling flow configurations.

In single-shaft combined-cycle turbines and turbine systems, a gas turbine may be operated independently from a steam turbine using appropriate bypass systems. In such a case, the steam turbine rotates, at least at some point, only under the force of the gas turbine. That is, the steam turbine does not rotate as a result of steam being supplied, as would occur when the steam turbine is fully operating, but is driven by the gas turbine. Permitting such unpowered rotation of the steam turbine, particularly as rotation speed increases toward the normal operational speed, may result in undesirable overheating due to windage heating caused by the large rotating metal mass.

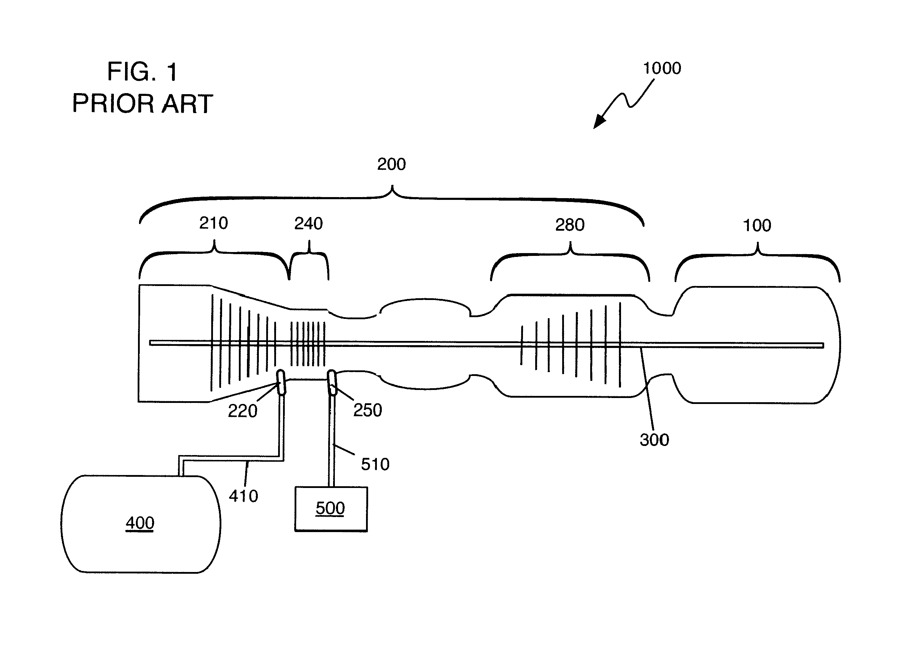

FIG. 1 shows a cross-sectional schematic view of a known turbine system 1000 comprising a gas turbine 100, a steam turbine 200 (including a low-pressure section 210, an intermediate-pressure section 240, and a high-pressure section 280), a turbine shaft 300 disposed within and between the gas turbine 100 and the steam turbine 200, an auxiliary boiler 400, and a condenser 500. The auxiliary boiler 400 or a similar apparatus is used to produce a quantity of "cooling" steam sufficient to remove the heat generated by the rotation losses, especially in the low-pressure steam turbine section 210, where these losses are the highest due to large diameters and rotating part active lengths. The auxiliary boiler 400 or similar apparatus is most often separate from, and considerably smaller than, a steam generating boiler or apparatus employed during full operation of the low-pressure section 210, and is generally only used to reduce such overheating during, for example, startup of the steam turbine 200.

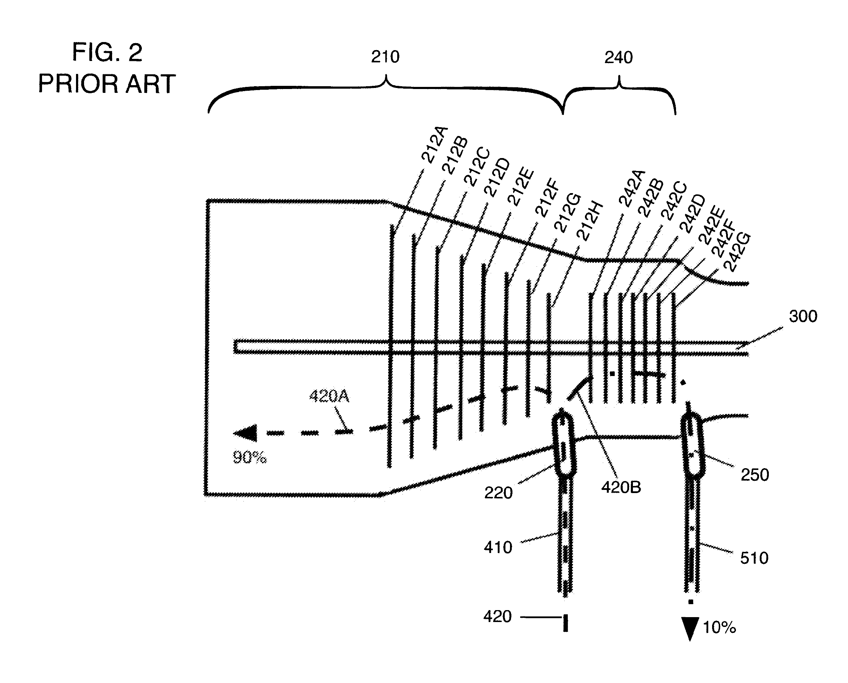

FIG. 2 shows a more detailed view of the low-pressure and intermediate-pressure sections, 210 and 240, respectively, including their respective stages 212A-H, 242A-G A cooling steam flow inlet 220 is typically located between the smallest stage 212H of the low-pressure steam turbine section 210 and the nearest intermediate-pressure stage 242A. A quantity of cooling steam 420 produced by the auxiliary boiler 400 (FIG. 1) passes along a cooling steam line 410 and through the cooling steam flow inlet 220. From there, a first portion 420A of the cooling steam 420 comprising approximately 90% of the cooling steam passes along each of the low-pressure stages 212A-H, beginning at the smallest 212H and ending at the largest 212A.

A second portion 420B of the cooling steam 420 comprising approximately 10% of the cooling steam flows in the opposite direction along each of the intermediate-pressure stages 242A-G, ultimately exiting the intermediate-pressure section 240 through a condenser outlet 250, and traveling along a condenser line 510 to the condenser 500 (FIG. 1).

While the above approach is sometimes capable of reducing "no load" overheating of the low-pressure steam turbine section 210, it is achieved at considerable expense and with limited efficiency. For example, the above approach requires between about 50,000 lb/hour and about 70,000 lb/hour of "cooling" steam from the auxiliary boiler 400 (FIG. 1) or similar apparatus. The cost of producing cooling steam in such quantities is about $10 USD per pound of steam.

In addition, known turbines and systems employing cooling steam do not distribute or target the steam based on the extent of temperature difference from the cooling steam temperature within stages 212A-H of the low-pressure section 210. That is, while some stages of the low-pressure section 210 may experience a greater temperature difference (e.g., the larger stages, such as 212A-C), known turbines and systems do not direct the cooling steam 420 to most efficiently reduce temperature differences across the stages 212A-H. For example, small (e.g., 212H) and large (e.g., 212A) stages of the low-pressure section 210 may experience "full load" temperatures between about 650°F and about 100°F, respectively, during a startup right after a full load rejection, with a cooling steam 420 (typically having a temperature of about 360°F) is introduced into the low-pressure section 210 nearer the smaller, hotter stages (e.g., 212H), as shown in FIG. 2. Thus, the cooling steam 420 overcools the smaller stages but does little to cool the larger, hotter stages (hotter during startup due to the rotation losses, but cooler during full load operation), requiring additional mass flow to keep the larger stages with their design temperature limit.

### BRIEF DESCRIPTION OF THE INVENTION

In one embodiment, the invention provides a single-shaft combined-cycle turbine comprising: a gas turbine; a steam turbine including: a high-pressure section; an intermediate-pressure section; and a low-pressure section having a plurality of stages; a turbine shaft disposed within and between both the gas turbine and the steam turbine; a first cooling steam flow inlet adjacent a first of the plurality of stages of the low-pressure section; and a second cooling steam flow inlet adjacent a second of the plurality of stages of the low-pressure section.

In another embodiment, the invention provides a single-shaft combined-cycle turbine comprising: a gas turbine; a steam turbine including: a high-pressure section; an intermediate-pressure section adjacent the high-pressure section; and a low-pressure section adjacent the intermediate-pressure section, the low-pressure section having a plurality of stages, a first of the plurality of stages located furthest from the intermediate-pressure section and a second of the plurality of stages located adjacent and between the first and a third of the plurality of stages; a turbine shaft disposed within and between both the gas turbine and the steam turbine; and a cooling steam flow inlet adjacent the third of the plurality of stages of the low-pressure section.

In still another embodiment, the invention provides a steam turbine comprising: a high-pressure section; an intermediate-pressure section adjacent the high-pressure section; and a low-pressure section adjacent the intermediate-pressure section, the low-pressure section having a plurality of stages, a first of the plurality of stages located furthest from the intermediate-pressure section and a second of the plurality of stages located adjacent and between the first and a third of the plurality of stages; and a cooling steam flow inlet adjacent the third of the plurality of stages of the low-pressure section.

### BRIEF DESCRIPTION OF THE DRAWINGS

There follows a detailed description of embodiments of the invention by way of example only with reference to the accompanying drawings, in which:

FIGS. 1 and 2 show cross-sectional schematic views of a known single-shaft combined-cycle turbine system;

FIGS. 3 and 4 show cross-sectional schematic views of a single-shaft combined-cycle turbine system according to one embodiment of the invention; and

FIGS. 5-7 show cross-sectional schematic views of a single-shaft combined-cycle turbine system according to another embodiment of the invention.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION OF THE INVENTION

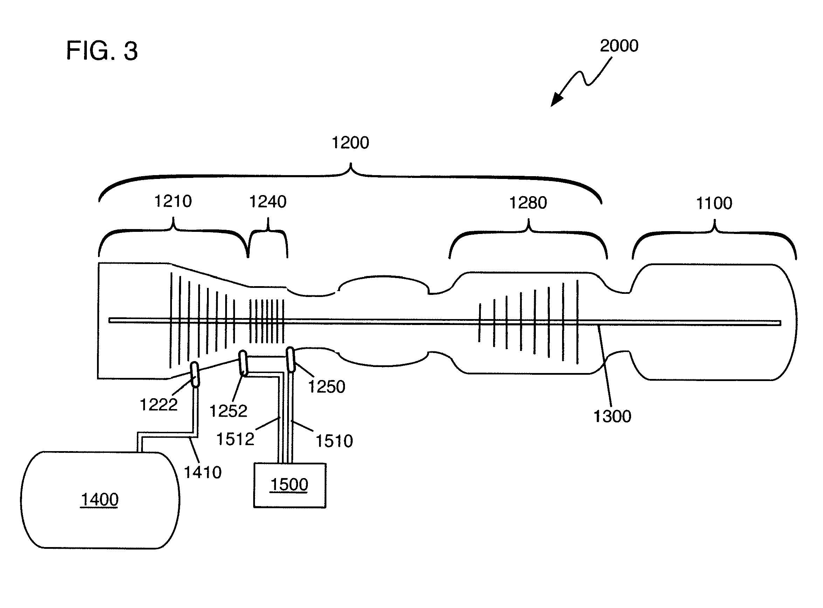

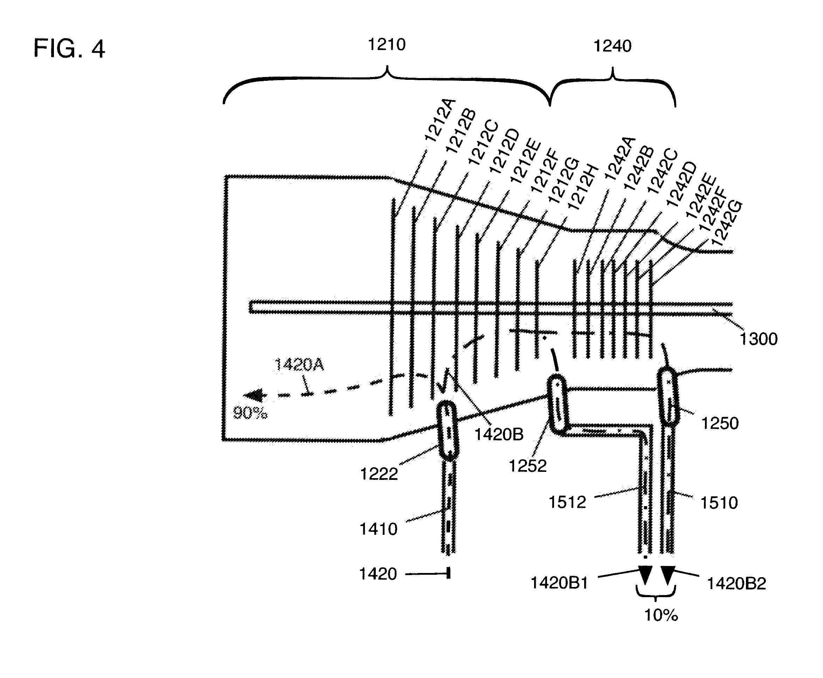

FIGS. 3 and 4 show general and detailed views, respectively, of a single-shaft combined-cycle turbine system 2000 (FIG. 3) according to one embodiment of the invention. As compared to known systems (e.g., 1000 in FIG. 1), the cooling steam flow inlet 1222 is disposed nearer the larger stages 1212A-C of the low-pressure section 1210. Such a configuration directs the first portion 1420A of the cooling steam 1420 to the larger, hotter stages 1212A-C which, as noted above, typically have a "no load" temperature significantly above that of the cooling steam 1420. As a result, the configuration shown in FIGS. 3 and 4 results in greater cooling of the larger, hotter stages 1212A-C, more efficient use of the cooling steam 1420, and, as a consequence, a need for less total cooling steam than in known systems. Typically, the amount of cooling steam needed using the configuration shown in FIGS. 3 and 4 is between about 70% and 75% that needed using known systems, yielding significant energy and financial savings.

A second portion 1420B of the cooling steam 1420 is directed across the smaller, cooler stages 1212D-H. A first subportion 1420B1 of the cooling steam 1420 then passes through an additional condenser outlet 1252 and an additional condenser line 1512 to the condenser 1500 (FIG. 3). A second subportion 1420B2 of the cooling steam 1420 passes through the stages 1242A-G of the intermediate-pressure section 1240, through the condenser outlet 1250 and the condenser line 1510 to the condenser 1500 (FIG. 3).

In the embodiment of the invention shown in FIGS. 3 and 4, the first portion 1420A of the cooling steam 1420 comprises approximately 90% of the total cooling steam and the second portion 1420B (and the first and second subportions 1420B1, 1420B2, combined) comprises approximately 10% of the total cooling steam. Thus, the improved efficiencies of the embodiment of the invention shown in FIGS. 3 and 4 are achieved without significant changes in the direction of the relative proportions of the cooling steam.

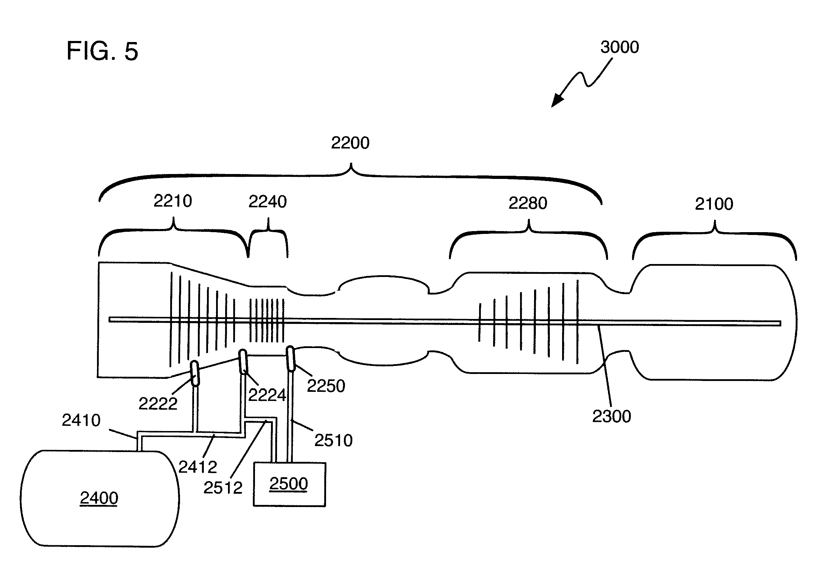

FIGS. 5-7 show a single-shaft combined-cycle turbine system 3000 according to another embodiment of the invention. Here, two cooling steam flow inlets 2222, 2224 are provided, the second cooling steam flow inlet 2224 adapted to also function as a condenser outlet, as will be described in greater detail below.

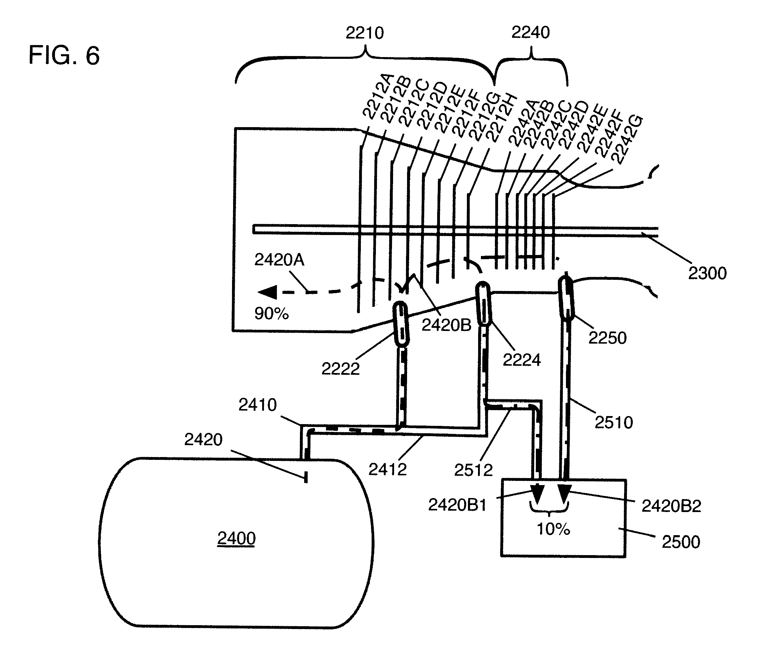

FIG. 6 shows the paths of cooling steam 2420 flow during a "warm" or "hot" restart of the turbine system 3000 (FIG. 5). Here, the cooling steam 2420 travels through the cooling steam line 2410 and then substantially as shown in FIG. 4. That is, a first portion 2420A of the cooling steam 2420 (comprising approximately 90% of the total cooling steam) is directed across the larger, hotter stages 2212A-C and a second portion 2420B is directed across the larger, cooler stages 2212D-H of the low-pressure section 2210. The second portion 2420B exits (as first and second subportions 2420B 1, 2420B2) through the condenser outlet 2250 and second cooling steam flow inlet 2224 (here functioning as an additional condenser outlet) and travels through the condenser line 2510 and additional condenser line 2512 to the condenser 2500.

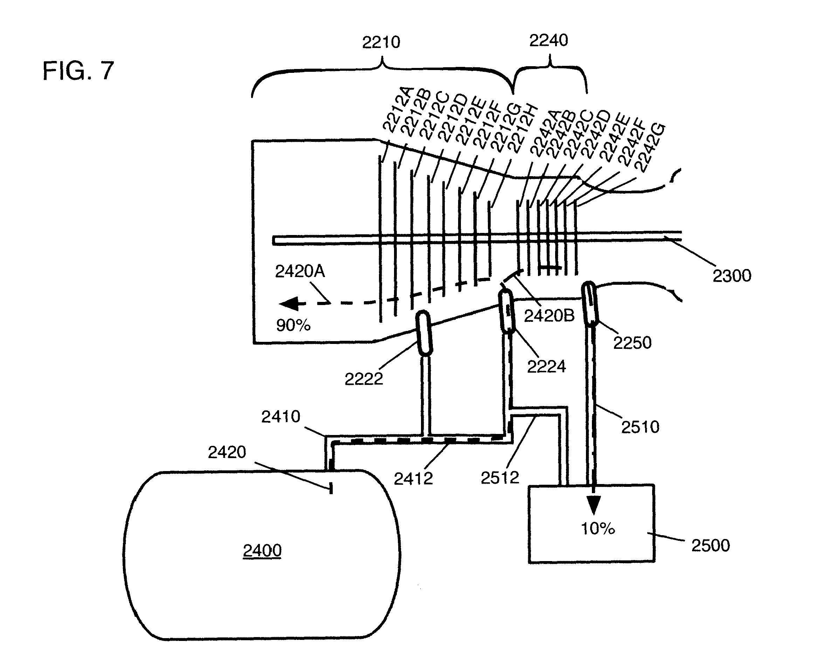

FIG. 7 shows the paths of cooling steam flow 2420 during a "cold" start of the turbine system 3000 (FIG. 5). Here, the cooling steam 2420 travels through the cooling steam line 2410 and additional cooling steam line 2412, entering the steam turbine 2200 (FIG. 5) through the second cooling steam flow inlet 2224 rather than the cooling steam flow inlet 2222. A first portion 2420A of the cooling steam 2420 is directed across the stages 2212A-H of the low-pressure section 2210 and a second portion 2420B of the cooling steam 2420 is directed across the stages 2242A-G of the intermediate-pressure section 2240, exiting through the condenser outlet 2250.

One skilled in the art would recognize, of course, that other configurations and steam flows are possible. For example, the additional cooling steam line 2412 may be connected directly to the auxiliary boiler 2400 rather than to the cooling steam line 2410. Similarly, the additional condenser line 2512 may be connected to the condenser line 2510 rather than directly to the condenser. These and other such configurations and steam flows are within the scope of the invention.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any related or incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

For completeness, various aspects of the invention are now set out in the following numbered clauses:
1. A single-shaft combined-cycle turbine comprising:
   a gas turbine;
   a steam turbine including:
      a high-pressure section;
      an intermediate-pressure section; and
      a low-pressure section having a plurality of stages;
   a turbine shaft disposed within and between both the gas turbine and the steam turbine;
   a first cooling steam flow inlet adjacent a first of the plurality of stages of the low-pressure section; and
   a second cooling steam flow inlet adjacent a second of the plurality of stages of the low-pressure section.
2. The single-shaft combined-cycle turbine of clause 1, wherein the second of the plurality of stages is smaller than the first of the plurality of stages.
3. The single-shaft combined-cycle turbine of clause 1, wherein the plurality of stages includes at least one additional stage larger than the first of the plurality of stages.
4. The single-shaft combined-cycle turbine of clause 1, wherein the plurality of stages includes at least two additional stages larger than the first of the plurality of stages.
5. The single-shaft combined-cycle turbine of clause 1, wherein the second cooling steam flow inlet is disposed nearer the intermediate-pressure section than is the first cooling steam flow inlet.
6. The single-shaft combined-cycle turbine of clause 1, wherein the second cooling steam flow inlet is adapted to receive cooling steam flow during a cold start of the low-pressure section.
7. The single-shaft combined-cycle turbine of clause 6, wherein the second cooling steam flow inlet is adapted to discharge cooling steam flow to a condenser during either or both of a warm restart and a hot restart of the low-pressure section.
8. The single-shaft combined-cycle turbine of clause 1, wherein the first cooling steam flow inlet is adapted to receive cooling steam flow during either or both of a warm restart and a hot restart of the low-pressure section.
9. A single-shaft combined-cycle turbine comprising:
   a gas turbine;
   a steam turbine including:
      a high-pressure section;
      an intermediate-pressure section adjacent the high-pressure section; and
      a low-pressure section adjacent the intermediate-pressure section, the low-pressure section having a plurality of stages, a first of the plurality of stages located furthest from the intermediate-pressure section and a second of the plurality of stages located adjacent and between the first and a third of the plurality of stages;
   a turbine shaft disposed within and between both the gas turbine and the steam turbine; and
   a cooling steam flow inlet adjacent the third of the plurality of stages of the low-pressure section.
10. The single-shaft combined-cycle turbine of clause 9, wherein the first of the plurality of stages is larger than the second of the plurality of stages.
11. The single-shaft combined-cycle turbine of clause 9, wherein the second of the plurality of stages is larger than the third of the plurality of stages.
12. The single-shaft combined-cycle turbine of clause 11, wherein the plurality of stages includes at least one additional stage smaller than the third of the plurality of stages.
13. The single-shaft combined-cycle turbine of clause 9, further comprising:
   a first condenser outlet adjacent a first of a plurality of stages of the intermediate-pressure section.
14. The single-shaft combined-cycle turbine of clause 13, further comprising:
   a second condenser outlet disposed between the cooling steam flow inlet and the first condenser outlet.
15. A steam turbine comprising:
   a high-pressure section;
   an intermediate-pressure section adjacent the high-pressure section; and
   a low-pressure section adjacent the intermediate-pressure section, the low-pressure section having a plurality of stages, a first of the plurality of stages located furthest from the intermediate-pressure section and a second of the plurality of stages located adjacent and between the first and a third of the plurality of stages; and
   a cooling steam flow inlet adjacent the third of the plurality of stages of the low-pressure section.
16. The steam turbine of clause 15, wherein the first of the plurality of stages is larger than the second of the plurality of stages.
17. The steam turbine of clause 15, wherein the second of the plurality of stages is larger than the third of the plurality of stages.
18. The steam turbine of clause 15, wherein the plurality of stages includes at least one additional stage smaller than the third of the plurality of stages.
19. The steam turbine of clause 18, further comprising:
   an additional cooling steam flow inlet adjacent the smallest of the plurality of stages.
20. The steam turbine of clause 19, wherein the additional cooling steam flow inlet is adapted to receive cooling steam flow during a cold start of the low-pressure section and is adapted to discharge cooling steam flow to a condenser during either or both of a warm restart and a hot restart of the low-pressure section.

## Claims

1. A single-shaft combined-cycle turbine (3000) comprising:
a gas turbine (2100);
a steam turbine (2200) including:
a high-pressure section (2280);
an intermediate-pressure section (2240); and
a low-pressure section (2210) having a plurality of stages (2212A-H);
a turbine shaft (2300) disposed within and between both the gas turbine (2100) and the steam turbine (2200);
a first cooling steam flow inlet (2222) adjacent a first (2212C) of the plurality of stages (2212A-H) of the low-pressure section (2210); and
a second cooling steam flow inlet (2224) adjacent a second (2212H) of the plurality of stages (2212A-H) of the low-pressure section (2210).

2. The single-shaft combined-cycle turbine (3000) of claim 1, wherein the second (2212H) of the plurality of stages (2212A-H) is smaller than the first (2212C) of the plurality of stages (2212A-H).

3. The single-shaft combined-cycle turbine (3000) of claim 1 or claim 2, wherein the plurality of stages (2212A-H) includes at least one additional stage (2212B) larger than the first (2212C) of the plurality of stages (2212A-H).

4. The single-shaft combined-cycle turbine (3000) of any one of the preceding claims, wherein the plurality of stages (2212A-H) includes at least two additional stages (2212A, 2212B) larger than the first (2212C) of the plurality of stages (2212AH).

5. The single-shaft combined-cycle turbine (3000) of any one of the preceding claims, wherein the second cooling steam flow inlet (2224) is disposed nearer the intermediate-pressure section (2240) than is the first cooling steam flow inlet (2222).

6. The single-shaft combined-cycle turbine (3000) of any one of the preceding claims, wherein the second cooling steam flow inlet (2224) is adapted to receive cooling steam flow (2420) during a cold start of the low-pressure section (2210).

7. The single-shaft combined-cycle turbine (3000) of claim 6, wherein the second cooling steam flow inlet (2224) is adapted to discharge cooling steam flow (2420) to a condenser (2500) during either or both of a warm restart and a hot restart of the low-pressure section (2210).

8. The single-shaft combined-cycle turbine (3000) of any one of the preceding claims, wherein the first cooling steam flow inlet (2222) is adapted to receive cooling steam flow (2420) during either or both of a warm restart and a hot restart of the low-pressure section (2210).

9. A single-shaft combined-cycle turbine (2000) comprising:
a gas turbine (1100);
a steam turbine (1200) including:
a high-pressure section (1280);
an intermediate-pressure section (1240) adjacent the high-pressure section (1280); and
a low-pressure section (1210) adjacent the intermediate-pressure section, the low-pressure section (1210) having a plurality of stages (1212AH), a first (1212A) of the plurality of stages located furthest from the intermediate-pressure section (1240) and a second (1212B) of the plurality of stages located adjacent and between the first (1212A) and a third (1212C)of the plurality of stages (1212A-H);
a turbine shaft (1300) disposed within and between both the gas turbine (1100) and the steam turbine (1200); and
a cooling steam flow inlet (1222) adjacent the third (1212C) of the plurality of stages (1212A-H) of the low-pressure section (1210).

10. The single-shaft combined-cycle turbine (2000) of claim 9, wherein the first (1212A) of the plurality of stages (1212A-H) is larger than the second (1212B) of the plurality of stages (1212A-H).

11. The single-shaft combined-cycle turbine (2000) of claim 9 or claim 10, wherein the second (1212B) of the plurality of stages (1212A-H) is larger than the third (1212C) of the plurality of stages (1212A-H).

12. The single-shaft combined-cycle turbine (2000) of claim 11, wherein the plurality of stages (1212A-H) includes at least one additional stage (1212D) smaller than the third (1212C) of the plurality of stages (1212A-H).

13. The single-shaft combined-cycle turbine (2000) of any of claims 9 to 12, further comprising:
a first condenser outlet (1250) adjacent a first (1242G) of a plurality of stages (1242A-G) of the intermediate-pressure section (1240).

14. The single-shaft combined-cycle turbine (2000) of claim 13, further comprising:
a second condenser outlet (1252) disposed between the cooling steam flow inlet (1222) and the first condenser outlet (1250).

15. A steam turbine comprising:
a high-pressure section;
an intermediate-pressure section adjacent the high-pressure section; and
a low-pressure section adjacent the intermediate-pressure section, the low-pressure section having a plurality of stages, a first of the plurality of stages located furthest from the intermediate-pressure section and a second of the plurality of stages located adjacent and between the first and a third of the plurality of stages; and
a cooling steam flow inlet adjacent the third of the plurality of stages of the low-pressure section.
